# EUROPEAN PATENT SPECIFICATION

(11) **EP 2 864 178 B1**
(45) Date of publication and mention of the grant of the patent: **28.03.2018**
(21) Application number: 13745156.3
(22) Date of filing: 24.06.2013
(51) Int. Cl.: B62B 9/28, B62B 7/00

(54) **MOUNTING ADAPTOR OF A CHILD-CARRYING UNIT TO A VEHICLE FRAME AND METHOD FOR MOUNTING SAME**
KINDERSITZHALTERUNG FÜR DIE MONTAGE AUF EINEM WAGENRAHMEN UND DESSEN MONTAGEVERFAHREN
ADPATATEUR POUR LE MONTAGE D'UN SIÈGE ENFANT SUR LE CHÂSSIS D'UN CHARIOT ET SON PROCÉDÉ DE MONTAGE

(30) Priority: 25.06.2012 GB 201211205
(43) Date of publication of application: 29.04.2015
(73) Proprietor: Icandy World Limited, Bedfordshire SG18 8UB (GB)
(72) Inventor: OFFORD, David Leslie, Maidenhead Berkshire SL6 6HA (GB)
(74) Representative: Burrows, Anthony Gregory
(86) International application number: PCT/GB2013/051658
(87) International publication number: WO 2014/001776

(56) References cited:
- DE-A1- 10 008 311
- JP-A- H10 291 480
- US-A1- 2007 252 352
- US-A1- 2010 148 473
- US-A1- 2012 153 583
- US-B1- 8 128 103

## Description

This invention relates to adaptor devices for vehicle frame assemblies and in particular to adaptor devices for child-carrying units to be mounted on to frame assemblies for pushchairs, strollers and the like.

US2007/252352 discloses an auxiliary seat attachable to a pushchair to enable it to accommodate two children seated side-by-side and facing in the same direction. The seat comprises a frame having a backrest and a base and a wheel in contact with the ground in an operative position to support a child seated on the base with their back against the backrest. The frame is configured so that the backrest and the base fold substantially flat when the auxiliary seat is not in use.

US2010/148473 discloses a stroller system including a stroller frame and a seat system. The stroller frame includes first and second frame supports spaced apart from each other, at least one third frame support attaching the first frame support to the second frame support, and wheels rotatably attached to one or more of the frame supports. The seat system is removably attached to the stroller frame and includes a seat support having first and second end portions, and first and second end connectors disposed on the corresponding first and second end portions of the seat support. Each end connector includes a connector body having first and second end portions, where each end portion defines a recess configured to receive one of the frame supports. The recesses arranged substantially in opposition to engage the received support in substantially opposing directions.

DE10008311 discloses a clamp body part of a fastener including a cam adjacent to its pivot axis, the clampi body and the cam extending away in opposite directions from this axis. The cam is used to pivot the clamp body so that it grips around a tubular pram frame. The fastener comprises a mounting body and clamp body which can be pivoted between mounting and holding positions. In the holding position, the clamp body grips around the tubular pram frame.

JPH10-291480 discloses an attachment capable of economically converting a single baby carriage into a double baby carriage and capable of being compactly folded. Right and left wheeled attachment leg bars are provided with connecting means to the hand bars of the single baby carriage, as well as angle regulating members of the attachment leg bars to the single baby carriage, and an interval regulating member between the right and left attachment leg bars so that they can be switched to the regulated or released state. A flexible seat is also provided across the right and left attachment leg bars.

US8128103 discloses an optionally deployable side seat for a baby stroller, to seat a second child, is secured by hand-operated connectors to nearly any baby or child stroller, without tools. The side seat faces to the side of the stroller and has a deployed position in which two wheels mounted in tandem on the side seat frame contact the pavement. For stowing the side seat remains on the stroller, and two quick-release lockable joints, in the position of arms on the side seat, are released and raised upwardly, which folds the seat bottom up against the seat back and raises up a lower frame portion that supports the wheels.

US2012/153583 discloses a child carrier apparatus comprising a base frame having a tube segment that is affixed with an attachment fixture, and a detachable seat including a tubular support, and a coupling element mounted at a side segment of the tubular support. The inclination of the tubular support is adjustable relative to the coupling element, and the coupling element is configured to detachably lock with the attachment fixture via a latch to hold the seat with the base frame.

According to a first aspect of the present invention, there is provided apparatus comprising an adaptor device for mounting a child-carrying unit to a vehicle frame assembly, said adaptor device including a mounting portion for mounting said adaptor device to a frame member of said vehicle frame assembly and a receptor portion for receiving said child-carrying unit, wherein said mounting portion comprises a channel section for receiving the frame member longitudinally of the channel section and a closing section slidingly engageable with the channel section along longitudinal free edges of the channel section, the arrangement being such that the closing section slidingly closes the channel section, such that the frame member is surrounded by the adaptor device.

According to a second aspect of the present invention, there is provided a method of mounting a child-carrying unit on a vehicle frame assembly, comprising mounting to a frame member of said assembly a channel section of a an adaptor device so that the frame member is received longitudinally of the channel section, slidingly closing the channel section with a closing section slidably engageable along longitudinal free edges of the channel section so as to surround the frame member and thereby lock the adaptor device to the frame assembly, and mounting a child-carrying unit to a receptor portion of the adaptor device.

Owing to these aspects, an adaptor device for a child-carrying unit or a further child-carrying unit, in addition to another child-carrying unit already mounted to the frame assembly, can be made of relative few parts and mounted to a frame member of the frame assembly in a relatively simple manner.

Advantageously, the respective sections having corresponding guiding members in order to guide the sliding of one section into the other. In this way, a slidable locking mechanism can be formed between the channel and closing sections such that the adaptor device is safely and securely mounted to the frame member.

Preferably, a channel of the channel section has a cross-sectional shape substantially the same as the frame member.

The receptor portion of the adaptor device for receiving the child-carrying unit may be connected to either the channel section or the closing section, depending upon the nature of the frame assembly to which the child-carrying unit is to be mounted.

One major advantage of the arrangement of the channel and closing sections is that a complete adaptor device can be provided in as few as two parts.

In order that the present invention can be clearly and completely disclosed, reference will now be made, by way of example only, to the accompanying drawings, in which:-
Figure 1 is a perspective view of a vehicle frame assembly having a pair of adaptor devices of a first embodiment, one attached to the frame assembly, and another in exploded view;
Figure 2 is close-up view of the exploded adaptor device of Figure 1;
Figure 3 is a view similar to Figure 1, but with the other adaptor device partially mounted on the frame assembly;
Figure 4 is a close-up view of the other partially mounted adaptor device;
Figure 5 is a perspective view of a vehicle frame assembly having a pair of adaptor devices of a second embodiment, one attached to the frame assembly, and another in exploded view;
Figure 6 is a perspective view of the adaptor device of the second embodiment; and
Figure 7 is a perspective view of the frame assembly of Figure 5 with the other adaptor device in a partially mounted condition.

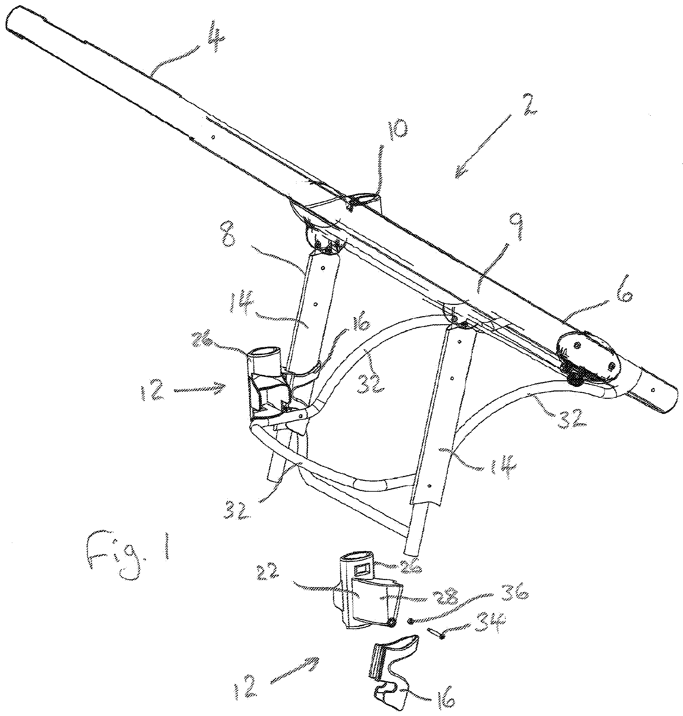

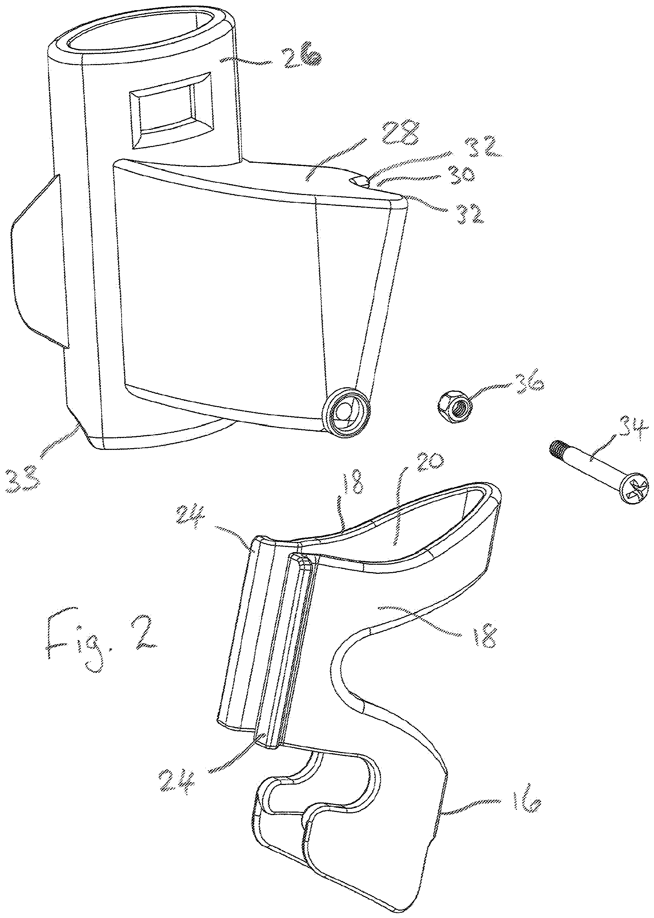

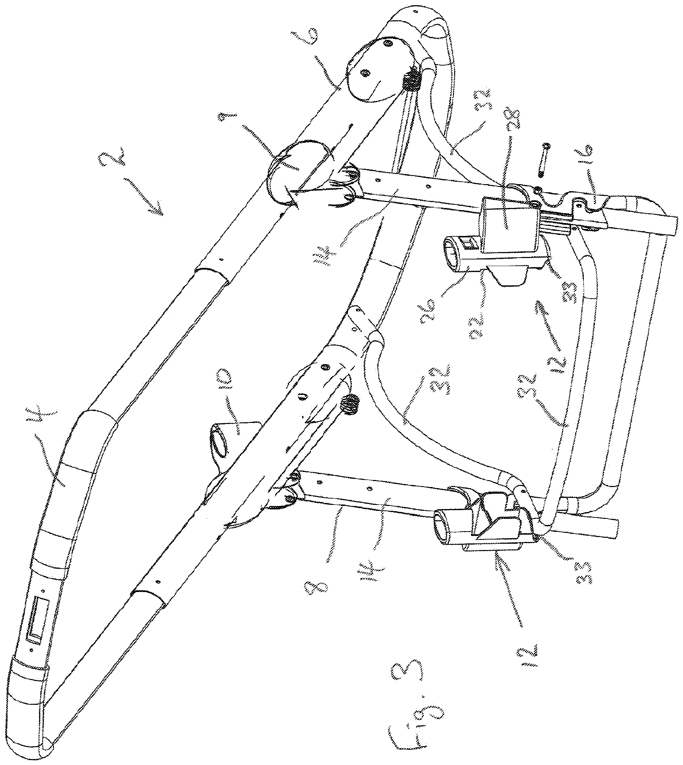

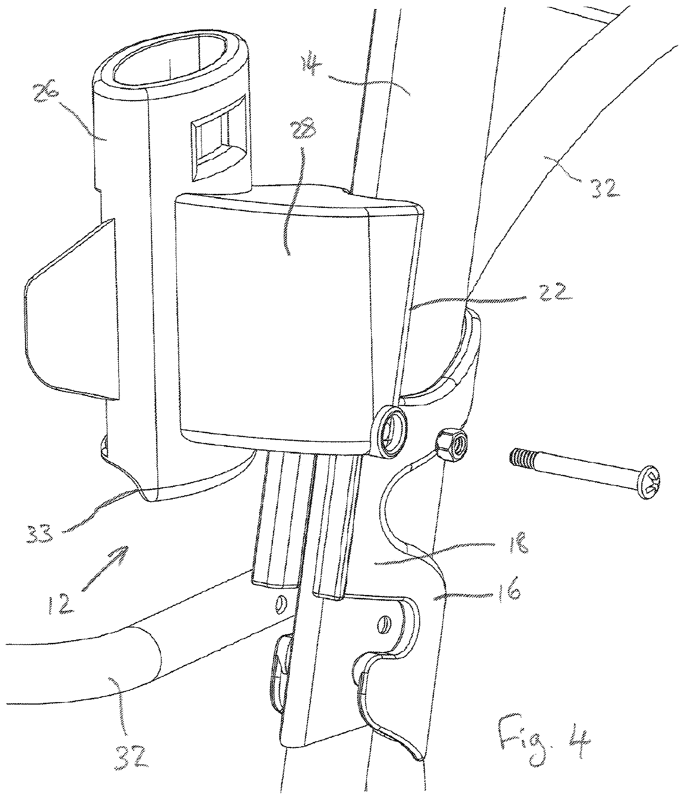

Referring to Figures 1 to 4, a vehicle frame assembly 2 comprises a handle part 4, a forwardly and downwardly projecting part 6 to which the front wheel(s) (not shown) are mountable and a rearwardly and downwardly projecting part 8 to which the rear wheels (not shown) are mountable. At the junction 9 of the parts 4, 6 and 8, there is a pair of receptor devices 10 (only part of one of the pair seen) located on respective opposite sides of the assembly 2 for mounting a child-carrying unit to the assembly 2.

In order to mount a second child-carrying unit to the assembly 2, a pair of adaptor devices 12, of just two parts, are mountable to the respective frame members 14 of the rearwardly and downwardly projecting part 8. Each adaptor device comprises a mounting portion which includes a channel section 16 which is a substantially U-shaped part in end view having side walls 18 and a channel 20 therethrough. The channel 20 has a cross-sectional shape substantially corresponding to the cross-section of the frame member 14 to which it is mountable.

The mounting portion of each adaptor device further comprises a closing section 22 which serves to close the opening of the channel 20 and safely and securely attach the adaptor device 12 to the frame member 14.

The channel section 16 is simply pushed over the frame member 14 so that the member 14 fits closely into the channel 20. The side walls 18 of the channel section 16 include, at a region where they project furthest from the bottom of the channel 20, a pair of wing projections in the form of lugs 24 which extend substantially perpendicularly from the immediately adjacent side wall regions.

Each closing section 22 includes a receptor portion 26 integrally formed with a branching portion 28 which extends generally perpendicularly from the receptor portion 26. The branching portion 28 includes at its outer end furthest from its attachment to the receptor portion 26 a second channel 30, which at its respective outer edge regions 32 includes recesses, and in the present case substantially L-shaped recesses (not shown) which serve to slidably receive the lugs 24 and the immediately adjacent regions of the side walls 18 of the channel section 16. The remainder of the frame member 14 not enclosed by the channel section 16 fits closely into the second channel 30 so that the adaptor device 2 completely encloses the frame member 14.

At the ends of the of the substantially L-shaped recesses is a stop portion against which leading edges of the lugs 24 abut to prevent further inward slidable movement of the channel section 16. The slidable connection between the channel and closing sections 16 and 22 serves to lockingly engage the adaptor device 2 around the frame member 14.

The frame assembly 2 further includes a basket frame 32 attached to the assembly 2 and each underside of the receptor portion 26 is provided with a contoured surface 33 that rests upon a part of the basket frame in the region of the adaptor devices 2.

Once both adaptor devices 2 have been mounted to the respective frame members 14, a second child-carrying unit can be mounted to the receptor portions 26. The weight of the second child-carrying unit is borne by the basket frame 32 and thus the frame assembly 2.

An optional fixing pin 34 and corresponding bolt 36 may be provided for further lockingly securing the channel and closing sections 16 and 22 around the frame member 14, in case of forces applied to the adaptor devices 12 which act to separate the channel section 16 and the closing section 22, for example, vibrational forces experienced when moving the vehicle frame assembly across an uneven surface.

During manufacture, the channel section 16 is formed so that the distance between the outer edges of the lugs 24 is greater than the distance of the corresponding inner edges of the L-shaped recesses. In this way, a user has to resiliently squeeze inwardly the side walls 18 (within the tolerance allowed by a small gap between the channel section 16 and the frame member 14) so that the wing projections 24 will slidingly engage the recesses. This arrangement ensures that when the closing section 22 is slidably engaging the channel section 16 the resilience in the channel section increases the frictional engagement with the L-shaped recesses such that there is a clamping effect around the frame member 14. In this way, sliding the closing section 22 into the channel section 16 causes a gripping force to be applied to the frame member 14 by the adaptor device.

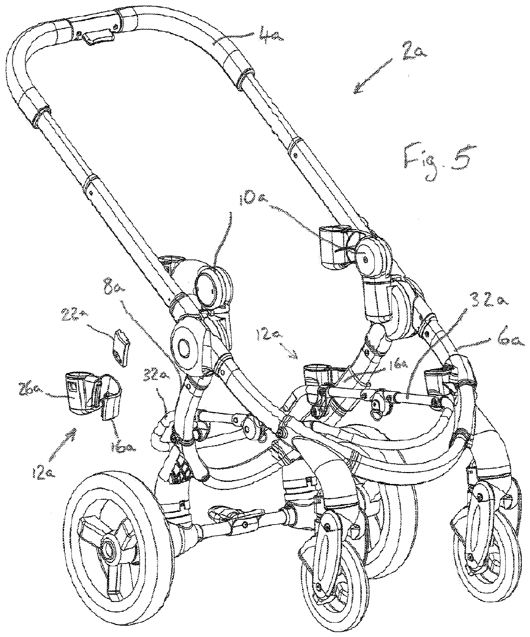

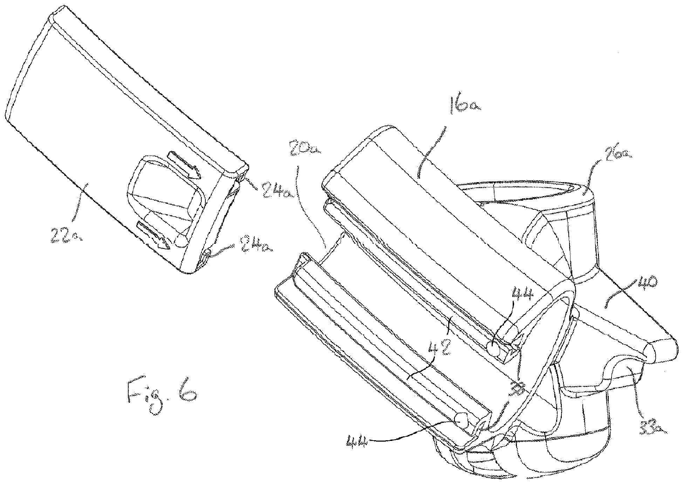

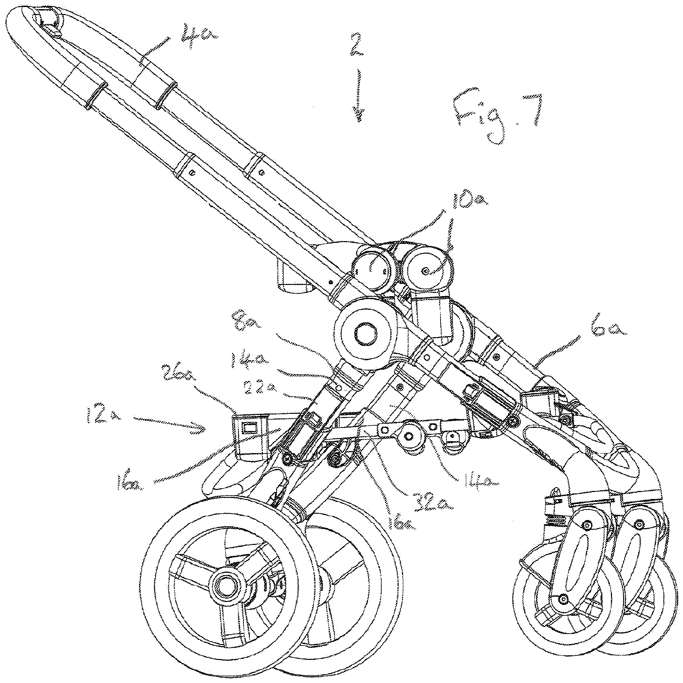

Referring to Figures 5 to 7, a second embodiment of the adaptor device 2 is shown and like features from Figures 1 to 4 are given the same reference numerals but with the suffix 'a'. The adaptor devices 2a in this embodiment have the receptor portions 26a integrally formed with the channel sections 16a rather than the closing sections 22a, which are simply, in this version, respective substantially rectangular pieces 22a. The substantially rectangular pieces 22a include at its underside inwardly facing substantially L-shaped projections in the form of lugs 24a which slidingly engage with the correspondingly shaped recesses, which in Figure 6 are shown as substantially L-shaped recesses 38 in the channel section 16a at the edge regions of the opening to the channel 20a. Once the channel section 16a has been mounted by push-fitting it on to the frame member 14a, the closing section pieces 22a slidingly close the opening of the channel thus completely surrounding the frame member 14a and which clampingly locks the adaptor device 2a to the frame assembly 2a in a similar manner to that described above with reference to Figures 1 to 4.

The receptor portion 26a is, similarly as the version of the adaptor device shown in Figures 1 to 4, provided with a contoured surface 33a that rests upon the a part of the basket frame assembly 32a. However, instead of the contoured surface being on the underside of the receptor portion 26a, it is provided on the underside of a projection 40.

In use, a pair of either version of the adaptor device 2, 2a are mounted to respective opposite frame members 14, 14a by push-fitting onto the frame members the channel sections 16, 16a so that the frame members 14, 14a enters completely the channels 20, 20a and that the receptor portions are therefore correctly aligned inward of the general frame assembly 2, 2a with the contoured surfaces rest upon the basket frame assembly 32, 32a. The closing sections 22, 22a can then be used to lock the adaptor devices 2, 2a onto the frame members 14, 14a by exerting a clamping action when the closing section 22a is slid into the channel section. The child-carrying unit can then be mounted to the receptor portions 26, 26a.

In a similar manner to that of the optional fixing pin 34 and corresponding bolt 36 referred to above, the locking security of the channel section 16a and the closing section 22a around the frame member 14a can be increased by providing the outwardly facing walls 42 bounding the recesses 38, preferably towards the end region of the recesses 38, with a raised part 44. In Figure 6, this raised part is shown as a convex portion. A wall portion (not shown) of the inside surface of the closing section 22 includes a corresponding indent surface (not shown) to the raised part 44 such that, when the channel and closing sections 16a and 22a are put together and are in an abutting face-to-face relationship, the raised parts 44 enter the corresponding indent surfaces. The arrangement of the raised part 44 and the corresponding indent surface could also be, of course, reversed compared to that shown in Figure 6. Therefore when the closing section 22a is slid into the channel section 16a, the raised part 44 and the indent surface engage with each other when the closing section 22a is in its fully engaged position such that the security of the connection between the channel and closing sections 16a and 22a is enhanced.

The adaptor devices 2, 2a, as shown, may be for a second child-carrying unit, or they may possibly be for one child-carrying unit to be mounted to the vehicle frame assembly.

## Claims

1. Apparatus comprising an adaptor device (12; 12a) for mounting a child-carrying unit to a vehicle frame assembly (2; 2a), said adaptor device including a mounting portion for mounting said adaptor device (12; 12a) to a frame member (14; 14a) of said vehicle frame assembly (2; 2a) and a receptor portion (26; 26a) for receiving said child-carrying unit, wherein said mounting portion comprises a channel section (16; 16a) for receiving the frame member (14; 14a) longitudinally of the channel section (16; 16a) and a closing section (22; 22a) slidingly engageable with the channel section (16; 16a) along longitudinal free edges of the channel section (16; 16a), the arrangement being such that the closing section (22; 22a) slidingly closes the channel section (16; 16a), such that the frame member (14; 14a) is surrounded by the adaptor device (12; 12a).

2. Apparatus according to claim 1, wherein the respective sections (16, 22; 16a, 22a) have corresponding guiding members (24, 32; 24a, 38) in order to guide the sliding of one section into the other.

3. Apparatus according to claim 1 or 2, wherein the receptor portion (26) is directly connected to the closing section (22).

4. Apparatus according to claim 3 as appended to claim 2, wherein the channel section (16) includes side walls (18) bounding the channel (20), and at a region where the side walls (18) project furthest from the bottom of the channel (20), a pair of wing projections (24) extend substantially perpendicularly outwardly from the immediately adjacent side wall regions.

5. Apparatus according to claim 4, wherein the receptor portion (26) is integrally formed with a branching portion (28) extending generally perpendicularly from the receptor portion (26).

6. Apparatus according to claim 5, wherein the branching portion (28) includes at its outer end furthest from its attachment to the receptor portion a second channel (30), which at its respective outer edge regions includes recesses (32), the recesses being substantially L-shaped and serve to slidably receive the respective wing projections (24) and the immediately adjacent regions of the side walls (18) of the channel section (16).

7. Apparatus according to claim 6, and further comprising a stop portion at the ends of the of the recesses (32) against which leading edges of the wing projections (24) abut to prevent further inward slidable movement of the channel section.

8. Apparatus according to claim 1 or 2, wherein the receptor portion (26a) is directly connected to the channel section (16a).

9. Apparatus according to claim 8, wherein the receptor (26a) portion is integrally formed with the channel section (16a).

10. Apparatus according to claim 8 or 9, wherein the closing section (22a) includes at its underside inwardly facing substantially L-shaped projections (24a) serving to slidingly engage with correspondingly shaped recesses (38) in the channel section (16) at the edge regions of the opening to the channel (20a).

11. Apparatus according to any preceding claim, the frame assembly (2; 2a) further comprising a basket frame (32; 32a) attached to the assembly and each of the receptor portions (26; 26a) are provided with a contoured surface (33; 33a) for resting upon a part of the basket frame (32; 32a).

12. A method of mounting a child-carrying unit on a vehicle frame assembly (2; 2a), comprising mounting to a frame member (14; 14a) of said assembly a channel section (16; 16a) of a an adaptor device so that the frame member (14; 14a) is received longitudinally of the channel section (16; 16a), slidingly closing the channel section with a closing section (22; 22a) slidably engageable along longitudinal free edges of the channel section (16; 16a) so as to surround the frame member (14; 14a) and thereby lock the adaptor device to the frame assembly (2; 2a), and mounting a child-carrying unit to a receptor portion (26; 26a) of the adaptor device.

13. A method according to claim 12, wherein the mounting to a frame member (14; 14a) comprises pushing the channel section (16; 16a) over the frame member (14; 14a) so that the frame member fits closely into a channel (20; 20a) of the channel section.

14. A method according to claim 12 or 13, wherein the channel section (16) includes side walls (18) bounding the channel (20), and at a region where the side walls project furthest from the bottom of the channel, a pair of wing projections (24) extend substantially perpendicularly outwardly from the immediately adjacent side wall regions, wherein the receptor portion (26) is integrally formed with a branching portion (28) extending generally perpendicularly from the receptor portion (26), and wherein the branching portion (28) includes at its outer end furthest from its attachment to the receptor portion a second channel (30), which at its respective outer edge regions includes recesses (32) which serve to slidingly receive the respective wing projections (24) and the immediately adjacent regions of the side walls of the channel section (16), and further comprising resiliently squeezing inwardly the side walls (18) about the frame member (14) so as to connect the closing section (22) to the channel section (16).

15. A method according to any one of claims 12 to 14, and further comprising supporting the receptor portion (26; 26a) on a basket frame (32; 32a) attached to the vehicle frame assembly (2; 2a).

## Patentansprüche

1. Vorrichtung umfassend eine Adaptervorrichtung (12; 12a) zur Montage einer Kindertrageeinheit an einer Fahrzeugrahmenanordnung (2; 2a), wobei die Adaptervorrichtung einen Montageabschnitt zum Montieren der Adaptervorrichtung (12; 12a) an ein Rahmenbauteil (14; 14a) der Fahrzeugrahmenanordnung (2; 2a) und einen Aufnahmeabschnitt (26; 26a) zum Aufnehmen der Kindertrageeinheit enthält, wobei der Montageabschnitt einen Kanalbereich (16; 16a) zum Aufnehmen des Rahmenbauteils (14; 14a) längs des Kanalbereichs (16; 16a) und einen Verschlussbereich (22; 22a), der gleitend in den Kanalbereich (16; 16a) entlang freier Längskanten des Kanalbereichs (16; 16a) eingreifen kann, umfasst, wobei die Anordnung so ist, dass der Verschlussbereich (22; 22a) den Kanalbereich (16; 16a) gleitend verschließt, sodass das Rahmenbauteil (14; 14a) von der Adaptervorrichtung (12; 12a) umgeben ist.

2. Vorrichtung nach Anspruch 1, wobei die jeweiligen Bereiche (16, 22; 16a, 22a) entsprechende Führungsbauteile (24, 32; 24a, 38) haben, um das Gleiten eines Bereichs in den anderen zu führen.

3. Vorrichtung nach Anspruch 1 oder 2, wobei der Aufnahmeabschnitt (26) direkt mit dem Verschlussbereich (22) verbunden ist.

4. Vorrichtung nach Anspruch 3 wie an Anspruch 2 angehängt, wobei der Kanalbereich (16) Seitenwände (18) enthält, die den Kanal (20) eingrenzen, und bei einem Bereich, wo die Seitenwände (18) am weitesten vom Boden des Kanals (20) abstehen, sich ein Paar von Flügelfortsätzen (24) im Wesentlichen rechtwinklig von den unmittelbar angrenzenden Seitenwandbereichen nach außen erstreckt.

5. Vorrichtung nach Anspruch 4, wobei der Aufnahmeabschnitt (26) ganzheitlich mit einem Verzweigungsabschnitt (28) gebildet ist, der sich im Allgemeinen rechtwinklig vom Aufnahmeabschnitt (26) erstreckt.

6. Vorrichtung nach Anspruch 5, wobei der Verzweigungsabschnitt (28) an seinem Außenende, das von seiner Befestigung am Aufnahmeabschnitt am weitesten entfernt ist, einen zweiten Kanal (30) enthält, der an seinen jeweiligen Außenkantenbereichen Vertiefungen (32) enthält, wobei die Vertiefungen im Wesentlichen L-förmig sind und dazu dienen, die jeweiligen Flügelfortsätze (24) und die unmittelbar angrenzenden Bereiche der Seitenwände (18) des Kanalabschnitts (16) gleitend aufzunehmen.

7. Vorrichtung nach Anspruch 6 und ferner umfassend einen Stoppabschnitt an den Enden der Vertiefungen (32), gegen die Führungskanten der Flügelfortsätze (24) anliegen, um eine weitere Gleitbewegung des Kanalabschnitts nach innen zu verhindern.

8. Vorrichtung nach Anspruch 1 oder 2, wobei der Aufnahmeabschnitt (26a) direkt mit dem Kanalbereich (16a) verbunden ist.

9. Vorrichtung nach Anspruch 8, wobei der Aufnahmeabschnitt(26a) ganzheitlich mit dem Kanalbereich (16a) gebildet ist.

10. Vorrichtung nach Anspruch 8 oder 9, wobei der Verschlussbereich (22a) an seiner Unterseite nach innen zeigende, im Wesentlichen L-förmige Fortsätze (24a) enthält, die dazu dienen, mit entsprechend geformten Vertiefungen (38) im Kanalbereich (16) an den Kantenbereichen der Öffnung zum Kanal (20a) ineinanderzugreifen.

11. Vorrichtung nach einem der vorangehenden Ansprüche, wobei die Rahmenanordnung (2; 2a) ferner einen Korbrahmen (32; 32a) umfasst, der an der Anordnung befestigt ist, und jeder der Aufnahmeabschnitte (26; 26a) mit einer konturierten Fläche (33; 33a) zum Ablagern eines Teils des Korbrahmens (32; 32a) darauf bereitgestellt ist.

12. Verfahren zur Montage einer Kindertrageeinheit auf einer Fahrzeugrahmenanordnung (2; 2a), umfassend eine Montage eines Kanalbereichs (16; 16a) einer Adaptervorrichtung an einem Rahmenbauteil (14; 14a) der Anordnung, sodass das Rahmenbauteil (14; 14a) längs des Kanalbereichs (16; 16a) aufgenommen ist, wobei er den Kanalbereich mit einem Verschlussbereich (22; 22a), der gleitend entlang freier Längskanten des Kanalbereichs (16; 16a) eingreifen kann, gleitend schließt, um das Rahmenbauteil (14; 14a) zu umgeben und dadurch die Adaptervorrichtung mit der Rahmenanordnung (2; 2a) zu verriegeln, und eine Montage einer Kindertrageeinheit an einen Aufnahmeabschnitt (26; 26a) der Adaptervorrichtung.

13. Verfahren nach Anspruch 12, wobei die Montage an einem Rahmenbauteil (14; 14a) ein Schieben des Kanalbereichs (16; 16a) über das Rahmenbauteil (14; 14a) umfasst, sodass das Rahmenbauteil genau in einen Kanal (20; 20a) des Kanalbereichs passt.

14. Verfahren nach Anspruch 12 oder 13, wobei der Kanalbereich (16) Seitenwände (18) enthält, die den Kanal (20) eingrenzen, und bei einem Bereich, wo die Seitenwände am weitesten vom Boden des Kanals abstehen, ein Paar von Flügelfortsätzen (24) sich im Wesentlichen rechtwinklig von den unmittelbar angrenzenden Seitenwandbereichen nach außen erstreckt, wobei der Aufnahmeabschnitt (26) ganzheitlich mit einem Abzweigungsabschnitt (28) gebildet ist, der sich im Allgemeinen rechtwinklig vom Aufnahmeabschnitt (26) erstreckt, und wobei der Abzweigungsabschnitt (28) an seinem Außenende, das von seiner Befestigung am Aufnahmeabschnitt am weitesten entfernt ist, einen zweiten Kanal (30) enthält, der an seinen jeweiligen Außenkantenbereichen Vertiefungen (32) enthält, die dazu dienen, die jeweiligen Flügelfortsätze (24) und die unmittelbar angrenzenden Bereiche der Seitenwände des Kanalbereichs (16) gleitend aufzunehmen, und ferner umfassend ein elastisches nach innen Drücken der Seitenwände (18) um das Rahmenbauteil (14) herum, um so den Verschlussbereich (22) mit dem Kanalbereich (16) zu verbinden.

15. Verfahren nach einem der Ansprüche 12 bis 14 und ferner umfassend ein Stützen des Aufnahmeabschnitts (26; 26a) auf einem Korbrahmen (32; 32a), der an die Fahrzeugrahmenanordnung (2; 2a) befestigt ist.

## Revendications

1. Appareil comprenant un dispositif adaptateur (12 ; 12a) pour le montage d'une unité de transport d'enfant sur un ensemble cadre de véhicule (2 ; 2a), ledit dispositif adaptateur comprenant une partie de montage pour monter ledit dispositif adaptateur (12 ; 12a) sur un élément de cadre (14 ; 14a) dudit ensemble cadre de véhicule (2 ; 2a) et une partie de réception (26 ; 26a) pour recevoir ladite unité de transport d'enfant, dans lequel ladite partie de montage comprend une section de canal (16 ; 16a) pour recevoir l'élément de cadre (14, ; 14a) longitudinalement de la section de canal (16 ; 16a) et une section de fermeture (22 ; 22a) pouvant se mettre en prise de manière coulissante avec la section de canal (16 ; 16a) le long de bords longitudinaux libres de la section de canal (16 ; 16a), l'agencement étant tel, que la section de fermeture (22 ; 22a) ferme de manière coulissante la section de canal (16 ; 16a) de sorte que l'élément de cadre (14 ; 14a) est entouré par le dispositif adaptateur (12 ; 12a) .

2. Appareil selon la revendication 1, dans lequel les sections (16, 22 ; 16a, 22a) respectives ont des éléments de guidage (24, 32 ; 24a, 38) correspondants afin de guider le coulissement d'une section dans l'autre.

3. Appareil selon la revendication 1 ou 2, dans lequel la partie réceptrice (26) est directement raccordée à la section de fermeture (22).

4. Appareil selon la revendication 3 telle qu'annexée à la revendication 2, dans lequel la section de canal (16) comprend des parois latérales (18) délimitant le canal (20), et au niveau d'une zone où les parois latérales (18) se projettent le plus loin du fond du canal (20), une paire de projections en aile (24) s'étendent sensiblement perpendiculairement vers l'extérieur par rapport aux zones de paroi latérale immédiatement adjacentes.

5. Appareil selon la revendication 4, dans lequel la partie de réception (26) est formée intégralement avec une partie de ramification (28) s'étendant globalement perpendiculairement à partir de la partie de réception (26).

6. Appareil selon la revendication 5, dans lequel la partie de ramification (28) comprend sur son extrémité extérieure, le plus loin de sa fixation à la partie de réception, un deuxième canal (30) qui comprend des creux (32) au niveau de ses zones de bord extérieur respectives, les creux étant sensiblement en forme de L et servant à recevoir de manière coulissante les projection en aile (24) respectives et les zones immédiatement adjacentes des parois latérales (18) de la section de canal (16).

7. Appareil selon la revendication 6 et comprenant en outre une partie d'arrêt aux extrémités des creux (32) contre laquelle des bords antérieurs des projections en aile (24) arrivent en butée pour empêcher le mouvement coulissant plus loin vers l'intérieur de la section de canal.

8. Appareil selon la revendication 1 ou 2, dans lequel la partie de réception (26a) est directement raccordée à la section de canal (16a).

9. Appareil selon la revendication 8, dans lequel la partie de réception (26a) est intégralement formée avec la section de canal (16a).

10. Appareil selon la revendication 8 ou 9, dans lequel la section de fermeture (22a) comprend, au niveau de son dessous, des projections en forme de L sensiblement orientées vers l'intérieur (24a) servant à se mettre en prise de façon coulissante avec des creux (38) formés de manière correspondante dans la section de canal (16) au niveau des zones de bord de l'ouverture vers le canal (20a) .

11. Appareil selon l'une quelconque des revendications précédentes, l'ensemble cadre (2 ; 2a) comprenant en outre un cadre en corbeille (32 ; 32a) fixé à l'ensemble, et chacune des parties de réception (26 ; 26a) étant dotée d'une surface profilée (33 ; 33a) pour reposer sur une partie du cadre en corbeille (32 ; 32a) .

12. Procédé de montage d'une unité de transport d'enfant sur un ensemble cadre de véhicule (2 ; 2a), comprenant le montage, sur un élément de cadre (14 ; 14a) dudit ensemble, d'une section de canal (16 ; 16a) d'un dispositif adaptateur de sorte que l'élément de cadre (14 ; 14a) est réceptionné longitudinalement de la section de canal (16 ; 16a) en fermant de manière coulissante la section de canal avec une section de fermeture (22 ; 22a) pouvant se mettre en prise de manière coulissante le long de bords longitudinaux libres de la section de canal (16 ; 16a) de manière à entourer l'élément de cadre (14 ; 14a) et ainsi verrouiller le dispositif adaptateur sur l'ensemble cadre (2 ; 2a), et le montage d'une unité de transport d'enfant sur une partie de réception (26 ; 26a) du dispositif adaptateur.

13. Procédé selon la revendication 12, dans lequel le montage sur un élément de cadre (14 ; 14a) comprend le fait de pousser la section de canal (16 ; 16a) pardessus l'élément de cadre (14 ; 14a) de sorte que l'élément de cadre s'ajuste étroitement dans le canal (20 ; 20a) de la section de canal.

14. Procédé selon la revendication 12 ou 13, dans lequel la section de canal (16) comprend des parois latérales (18) délimitant le canal (20), et au niveau d'une zone où les parois latérales se projettent le plus loin du fond du canal, une paire de projections en aile (24) s'étend sensiblement perpendiculairement vers l'extérieur des zones de paroi latérale immédiatement adjacentes, dans lequel la partie de réception (26) est intégralement formée avec une partie de ramification (28) s'étendant globalement perpendiculairement à partir de la partie de réception (26), et dans lequel la partie de ramification (28) comprend, sur son extrémité extérieure, le plus loin de sa fixation à la partie de réception, un deuxième canal (30) qui comprend des creux (32) sur ses zones de bord extérieur respectives, lesquels servent à recevoir de façon coulissante les projections en aile (24) respectives et les zones immédiatement adjacentes des parois latérales de la section de canal (16), et comprenant en outre des parois latérales (18) de serrage élastiquement vers l'intérieur autour de l'élément de cadre (14) de manière à raccorder la section de fermeture (22) à la section de canal (16).

15. Procédé selon l'une quelconque des revendications 12 à 14 et comprenant en outre le support de la partie de réception (26 ; 26a) sur un cadre en corbeille (32 ; 32a) fixé à l'ensemble cadre de véhicule (2 ; 2a).
